# EUROPEAN PATENT SPECIFICATION

(11) **EP 4 638 875 B1**
(45) Date of publication and mention of the grant of the patent: **19.08.2026**
(21) Application number: 23837446.6
(22) Date of filing: 21.12.2023
(51) Int. Cl.: E02F 3/36, B66C 3/00

(54) **TILTROTATOR ARRANGEMENT INCLUDING A TILTROTATOR AND A VALVE**
KIPPROTATORANORDNUNG MIT EINEM KIPPROTATOR UND EINEM VENTIL
AGENCEMENT DE ROTATEUR INCLINABLE COMPRENANT UN ROTATEUR INCLINABLE ET UNE VANNE

(30) Priority: 22.12.2022 SE 2251563
(43) Date of publication of application: 29.10.2025
(73) Proprietor: Rototilt Group AB, 922 21 Vindeln (SE)
(72) Inventor: BJUHR, Niklas, 922 91 VINDELN (SE); JONSSON, Anders, 922 31 VINDELN (SE); SJÖDIN, Daniel, 903 31 UMEÅ (SE)
(74) Representative: Noréns Patentbyrå AB
(86) International application number: PCT/SE2023/051301
(87) International publication number: WO 2024/136747

(56) References cited:
- JP-A- 2001 065 608
- US-A- 4 717 191
- US-A1- 2022 120 054
- US-B2- 10 100 487
- US-B2- 7 311 489

## Description

### TECHNICAL FIELD

The invention relates to a tiltrotator arrangement including a tiltrotator and a valve arrangement.

### BACKGROUND

In forestry, construction work and the like it has become more and more common to utilise a tiltrotator at the outer end of a work arm of a work vehicle, such as an excavator. The tiltrotator has a lower holder for carrying a tool such as a compactor, hydraulic hammer, grapple, bucket etc. The tiltrotator simplifies the use of different tools as it is furnished with a hydraulic tool coupler for a simple change of tools and provides both a tilting movement and an unlimited rotational movement. With a tiltrotator mounted on its work arm the excavator becomes a more useful tool carrier in that the functionality of the tool is increased when mounted on a tiltrotator.

The tiltrotator is provided with a pressurised hydraulic fluid from a hydraulic pressure source to drive the tilting motor, which is normally comprised of two hydraulic cylinders, and the rotation motor comprised in the tiltrotator. Further, a tiltrotator is provided with a hydraulic swivel so as to drive the functions of a tool arranged below the tiltrotator. In a conventional tiltrotator a first pair of lines through the swivel are often provided to drive a grapple module, which may be a complementary part of the tiltrotator. A second pair of lines through the swivel is provided to drive a function of a tool arranged below the tiltrotator. Further, a third pair of lines through the swivel may be provided to drive a hydraulic cylinder arranged to lock the tool to a tool coupler arranged at the lower part of the tiltrotator.

To limit the number of hydraulic hoses along the work arm from the source of pressurised hydraulic fluid on the work machine, a valve device with control valves is arranged close to, or as an integrated part of the tiltrotator to control the hydraulic flow to the different hydraulic functions of the tiltrotator and, if the tool attached to the tiltrotator is a hydraulic tool, the hydraulic functions of said tool. Two hydraulic hoses are arranged to the valve device, one hose from the pressure source and one hose for the return flow to the tank.

The tiltrotator is arranged to fulfil the demands of most types of different work machine operators operating in different construction or wood-working branches. However, due to the limited space in and around the tiltrotator the valve device has a limitation on how great a hydraulic flow it may provide to the different hydraulic applications. Conventionally, a valve device may provide a maximum flow of about 60-100 litres of hydraulic fluid per minute and per line, which is sufficient for most hydraulic applications. An example of such an application is shown in US 2022/120054 A1.

However, some hydraulic tools, such as cutters, compactors, hydraulic hammer grapples etc., demand a higher hydraulic flow than what may be conventionally provided, typically about 150-200 I/min.

Therefore, for such applications two additional lines, one line for providing pressurised hydraulic fluid and one line for the return flow, may be arranged in hoses along the crane to provide a dedicated flow that bypasses the valve device and is connected directly to the high demand hydraulic tool arranged below the tiltrotator via the swivel.

However, the arrangement of these additional hoses is costly, and in addition these lines need to be separately connected to the swivel of the tiltrotator, which has proven difficult to achieve without hindering the range of movement of the tiltrotator.

It would be advantageous to achieve an arrangement configured to provide a higher flow than what is conventionally provided at a tiltrotator, without the need of providing additional hoses along the work arm.

### SUMMARY OF THE INVENTION

It is an object of the invention to provide an arrangement where a higher flow than what is conventionally provided at a tiltrotator may be provided to a hydraulic tool arranged below a tiltrotator. This object is achieved by the invention according to a first and a second aspect.

According to a first aspect the invention relates to a tiltrotator arrangement comprising a valve arrangement and a tiltrotator comprising a tool coupler for carrying a hydraulic tool, and a hydraulic swivel including at least a first pair of swivel lines and a second pair of swivel lines for conveying hydraulic fluid between an upper part of the tiltrotator to a lower part thereof, the lower part being rotationally coupled to the upper part, the valve arrangement comprising:
a first hydraulic valve device arranged at the upper part of the tiltrotator, which first hydraulic valve device is connected to a hydraulic pressure source via a pressure line and to a tank via a tank line, the first hydraulic valve device comprising:
a first valve to connect the pressure line to a first line of the first pair of swivel lines to provide a first feed flow to the lower part of the tiltrotator via said first line and to simultaneously connect a second line of the first pair of swivel lines to the tank line, and
a second valve to connect the pressure line to a first line of the second pair of swivel lines to provide a second feed flow to the lower part of the tiltrotator via said second line and to simultaneously connect a second line of the second pair of swivel lines to the tank line,
wherein the valve arrangement further comprises a second hydraulic valve device arranged at the lower part of the tiltrotator to interconnect the first line of the first pair of swivel lines with the first line of the second pair of swivel lines and the second line of the first pair of swivel lines with the second line of the second pair of swivel lines to a high demanding hydraulic tool connection to provide a joint feed flow to the high demanding hydraulic tool connection.

The tiltrotator arrangement in accordance with the invention makes it possible to arrange and drive a high demanding hydraulic tool on a conventional tiltrotator without the need of reconstructing the tiltrotator or to arrange additional hydraulic hoses along the work arm of the work machine to the tiltrotator.

In specific embodiments of the invention the second hydraulic valve device comprises an auxiliary valve arranged to connect a third pair of swivel lines to an auxiliary hydraulic function.

In these embodiments hydraulic connections for an auxiliary hydraulic function is provided at the lower part of the tiltrotator by the use of existing hydraulic lines through the swivel of the tiltrotator, without the need of reconstructing the tiltrotator or making any adaptations other than to implement the second hydraulic valve device in accordance with the invention.

This is useful because it is often desired to have the possibly of utilising an auxiliary hydraulic function at the lower part of the tiltrotator, and in view of that the interconnection of the two pairs of swivel lines takes away one connection for a hydraulic function, the auxiliary valve in the second valve device provides an advantageous way of providing an auxiliary hydraulic connection for an additional hydraulic function.

In specific embodiments of the invention a locking block is arranged at the lower part of the tiltrotator for locking and unlocking a hydraulic tool to a tool coupler, wherein a third valve is arranged to regulate the locking block by connecting the pressure line to either a first side of a hydraulic cylinder to push the locking block to a closed position or a second side of the hydraulic cylinder to push the locking block to an open position.

In specific embodiments of the invention the third valve is arranged in the first hydraulic valve device to provide a feed flow to the lower part of the tiltrotator via a pair of swivel lines through the swivel.

In specific embodiments the auxiliary hydraulic function and the hydraulic cylinder share a swivel line, which is connected to the auxiliary valve and to the first side of the hydraulic cylinder to push the locking block to a closed position, and wherein the auxiliary valve is arranged to only be operable when the tool coupler is in a closed position.

This is advantageous as the auxiliary hydraulic function and the tool coupler shall never be manoeuvred at the same time, and the auxiliary hydraulic function shall only be manoeuvred when the hydraulic cylinder of the tool coupler is pressurised to keep the locking block in the closed position. The auxiliary hydraulic function may hence not be manoeuvred when the locking block is not in its closed position.

In alternative embodiments the third valve is instead arranged in the second hydraulic valve device, wherein an extended pressure line and an extended tank line are provided to the third valve via the swivel.

In embodiments of the invention the auxiliary hydraulic function is a grapple module arranged on the lower part of the tiltrotator.

The grapple module is a popular auxiliary hydraulic function, and it is therefore an advantage to be able to provide this function in combination with a high demanding hydraulic tool without the need of reconstructing the tiltrotator or making any adaptations other than to implement the second hydraulic valve device.

In embodiments of the invention the first hydraulic valve device is configured to provide a flow of at least 75 I/min, preferably at least 90 I/min, via both the first swivel line and the second swivel line to provide a joint feed flow of at least 150 I/min, preferably at least 180 I/min, to the high demanding hydraulic tool.

Conventionally, there is room for two valves providing about 100 I/min, each, but there is not room for one valve providing about 200 I/min, which is required by some high demanding hydraulic functions. This would not even be possible if one or both of the valves providing about 100 I/min would be removed and replaced by the one valve providing about 200 I/min.

Hence, the invention makes it possible to provide at least 150 I/min, preferably at least 180 I/min, to a high demanding hydraulic tool in the existing space at a tiltrotator by providing the second hydraulic valve device at the lower part of the tiltrotator.

In embodiments of the invention two alternative connections are provided for the high demanding hydraulic tool connection, a first high demanding hydraulic tool connection on the outside of the lower part of the tiltrotator, and a second high demanding hydraulic tool connection arranged on a lower side of the lower part.

Specifically, the second high demanding hydraulic tool connection is arranged for the possibility of providing a multi-coupling arrangement where a hydraulic tool is hydraulically connected to the high demanding hydraulic tool connection in the tool coupling process, such is in the movement provided by the hydraulic cylinder of the tool coupler when the locking block is moved to its closing position, engaging the hydraulic tool.

Other embodiments and advantages will be apparent from the detailed description and the appended drawings.

### BRIEF DESCRIPTION OF THE DRAWINGS

Below, specific embodiments of the invention will be described with reference to the appended drawings, of which:
- Fig. 1: shows a compactor arranged on a tiltrotator on the work arm of a work machine,
- Fig. 2: shows a grapple arranged on a tiltrotator, and
- Fig. 3: is a perspective view of a tiltrotator from above, illustrating the position of a first hydraulic valve device,
- Fig. 4: is a perspective view of the tiltrotator from below, illustrating the position of a second hydraulic valve device,
- Fig. 5: is a hydraulic schematic illustrating a first embodiment of the invention,
- Fig. 6: is a hydraulic schematic illustrating a second embodiment of the invention,
- Fig. 7: is a perspective view of the first hydraulic valve device shown in Fig. 3, and
- Fig. 8: is a perspective view of the second hydraulic valve device shown in Fig. 4.

### DETAILED DESCRIPTION OF THE SHOWN EMBODIMENTS

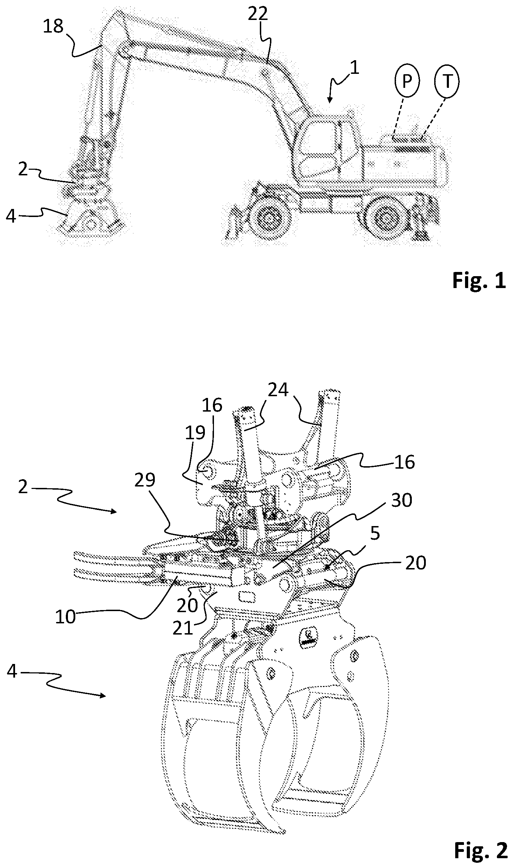

In Fig. 1 a work machine 1 with a work arm 18 is shown. At the outer end of the work arm 18 a tiltrotator 2 is arranged which carries a hydraulic tool 4, here in the form of a compactor. Hydraulic lines 22, typically in the form of hoses, are arranged along the work arm 18, one hose from a pressure source P and one hose for the return flow to a tank T, which are both arranged on the work machine 1.

In Fig. 2, a disconnected tiltrotator 2 carrying a hydraulic tool 4 in the form of a grapple is shown. The tiltrotator 2 comprises a coupling unit 19 at its upper end with axle pins 16 for connection to a tool coupler provided on an outer end of a work arm of a working machine as illustrated in Fig. 1. A tilting motor 24 in the form of two hydraulic cylinders are arranged at an upper part 29 of the tiltrotator 2. By manoeuvring of the tilting motor 24, the main portion of the tiltrotator 2 may be tilted with respect to the coupling unit 19.

A lower part 30 the tiltrotator 2 is rotatably arranged with respect to the upper part 29 of thereof. The lower part 30 of the tiltrotator 2 is mainly comprised of a tool coupler 5 for attachment of the hydraulic tool 4, the hydraulic tool comprising a coupling unit 21 with axle pins 20 arranged to be attached to the tool coupler 5. In the shown embodiment a grapple module 10 is arranged on the lower part 30 the tiltrotator 2. Both the hydraulic tool 4 and the grapple module 10 are hydraulically driven and are fed with hydraulic fluid via the tiltrotator 2.

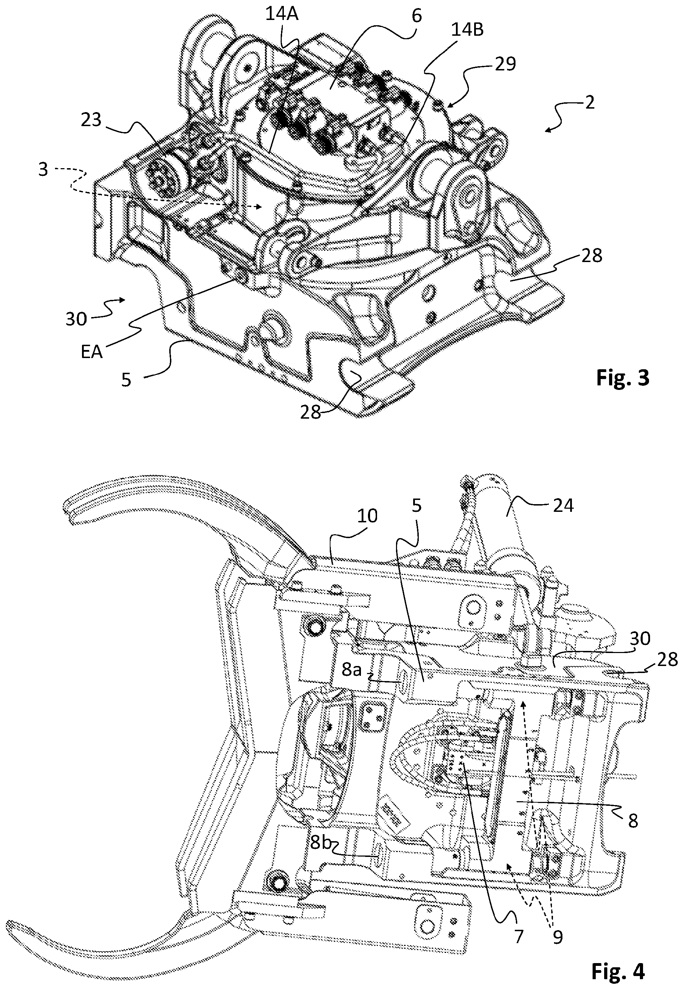

Fig. 3 is a perspective view from above of tiltrotator 2 without a tilting motor and without a grapple module. A first hydraulic valve device 6 is arranged at the upper part 29 of the tiltrotator 2, i.e., on the upstream side thereof, in connection to the hydraulic pressure source P, the first hydraulic valve device 6 being connected to said hydraulic pressure source P and to tank T via separate hoses 22. See Fig. 1.

The first hydraulic valve device 6 is arranged to selectively connect the flow of pressurised hydraulic flow from the pressure source P to different hydraulic functions arranged on and below the tiltrotator 2. The tiltrotator 2 comprises a hydraulic swivel 3 for conveying hydraulic fluid from the first hydraulic valve device 6 at the upper part 29 of the tiltrotator 2 to the lower part 30 thereof, which is arranged to rotate with respect to the upper part 29.

The hydraulic swivel 3 is contained inside the tiltrotator 2 and is schematically illustrated in Fig. 3 although it is not visible from outside of the tiltrotator 2. The hydraulic swivel 3 comprises a plurality of lines for conveying hydraulic fluid in both directions over the rotation interface between the upper part 29 and the lower part 30 of the tiltrotator 2.

The connection ports to the lines from the valves inside the first hydraulic valve device 6 are arranged on the side of the valve device 6 that faces the upper part 29 of the tiltrotator 2 to pass through the swivel 3 to the lower part 30 of the tiltrotator 2 and hence these connection ports are not visible in Fig. 3. A hydraulic tool connection EA that is connected to the first hydraulic valve device 6 via the swivel 3 is provided on the outside of the lower part 30 of the tiltrotator 2.

Lines 14A and 14B are arranged from the valve in the first hydraulic valve device 6 controlling the rotation motor of the tiltrotator 2. These lines need not be provided through the swivel as the rotation motor may be driven from above the swivel 3.

In Fig. 4 a tiltrotator 2 with a grapple module 10 is shown from below. As is illustrated in Fig. 4 and in accordance with the invention, a second hydraulic valve device 7 is arranged at the lower part 30 of the tiltrotator 2. In view of that second hydraulic valve device 7 is arranged downstream of the swivel 3, it is connected to the first hydraulic valve device 6 via a plurality of swivel lines connecting the mutually rotating upper and lower parts, 29 and 30 respectively, through the swivel 3.

Further, in Fig 4 the tilting motor 24 in the form of two hydraulic cylinders for providing a tilting movement of the tiltrotator is shown, as well as an arrangement comprising hydraulic cylinders 9 for achieving a locking of a hydraulic tool to the tool coupler 5. The hydraulic cylinders 9 are arranged to drive a locking block 8 typically comprising a pair of locking wedges 8a and 8b, between a locking position and an unlocking position. Specifically, the hydraulic cylinders 9 are arranged in line with the locking wedges 8a and 8b inside the locking block, such that they are not visible in the drawing. Their positions are indicated by the broken arrows 9.

The wedges 8a and 8b of the locking block 8 are preferably shaped to mate with the cylindrical shape of a coupling pin of a coupling unit on a tool to be attached to the tiltrotator. In Fig 4, the locking wedges 8a and 8b of the locking block 8 are shown in the unlocking position. In the locking position, the locking wedges 8a and 8b will extend out from their respective opening and block a first axle pin of a tool connector, wherein a second axle pin is arranged to be received in the therefore arranged recesses 28 on the tool coupler 5.

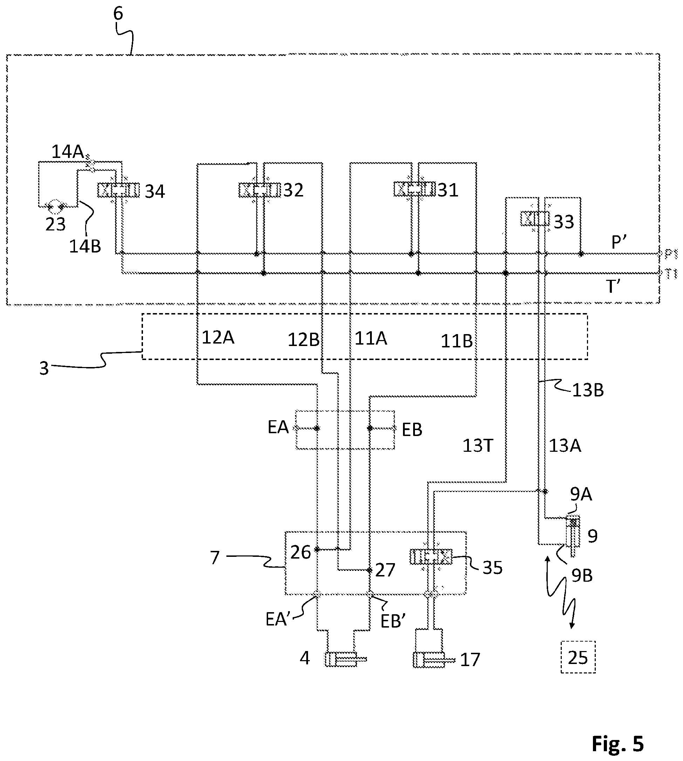

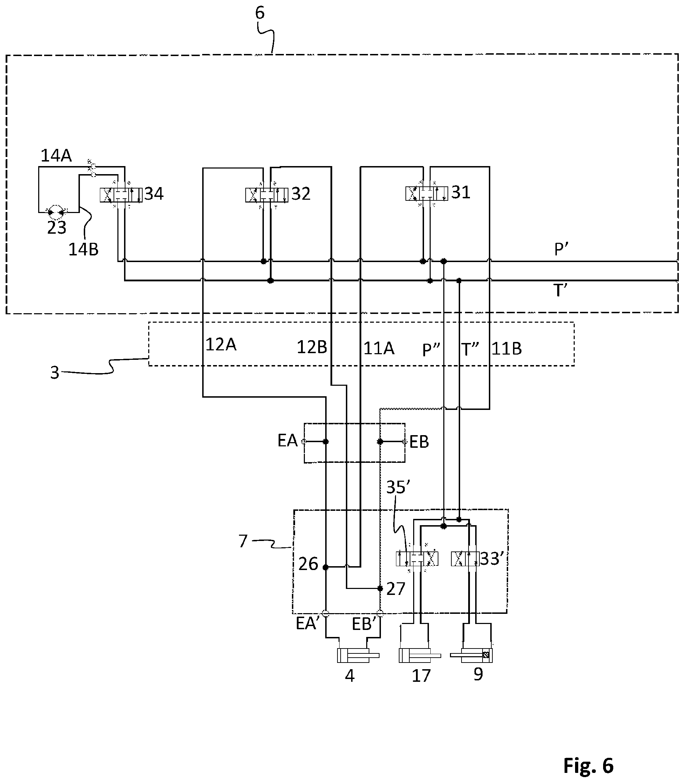

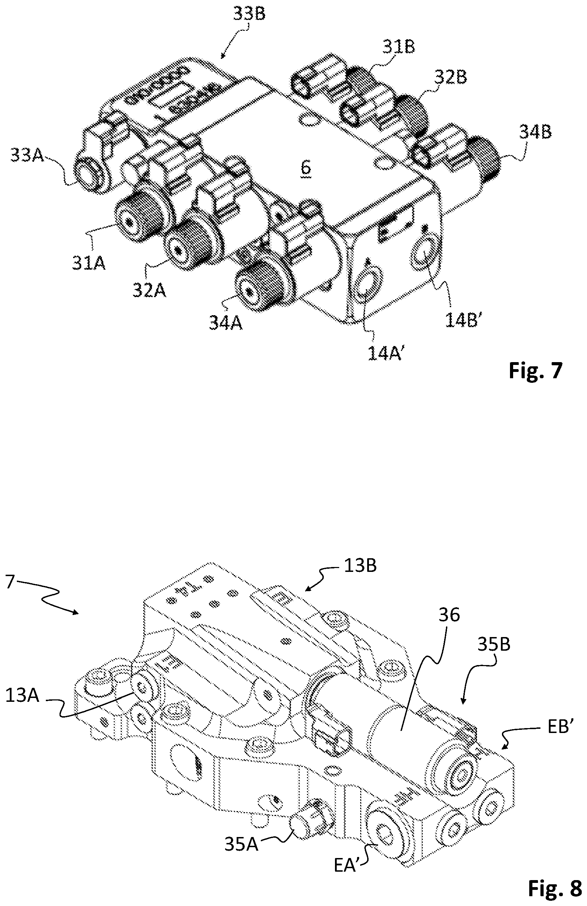

An embodiment of the first hydraulic valve device 6 is shown in a perspective view in Fig. 7, and an embodiment of the second hydraulic valve device 7 is shown in a perspective view in Fig. 8 and will be described further below. Firstly though, the hydraulic connections of the valve arrangement will be described with reference to Figs. 5 and 6.

Fig. 5, is a hydraulic schematic illustrating how the first and second hydraulic valve device 6 and 7, respectively, are connected to each other and to the different hydraulic functions of the tiltrotator's valve arrangement.

In the embodiment shown in Fig. 5 the first hydraulic valve device 6 comprises four different valves 31-34. This is however a simplification provided to illustrate the functions of the invention. Other embodiments, with more or fewer valves, are conceivable within the scope of the invention. For instance, the tilting motor or a valve for regulating the tilting motor are not illustrated in Fig. 5.

In the shown embodiment a first valve 31 is arranged to provide a first hydraulic function with pressurised hydraulic fluid and a second valve 32 is arranged to provide a second hydraulic function with pressurised hydraulic fluid, both hydraulic functions being double acting functions arranged at the lower part 30 of the tiltrotator 2, i.e., downstream of the hydraulic swivel 3.

A, third valve 33 is arranged to feed a hydraulic cylinder 9 arranged for locking and unlocking a hydraulic tool 4 to the tool coupler 5 arranged at the lower part of the tiltrotator 2.

Further, a fourth valve 34 is arranged in the first valve device 6 to feed the inherent rotation motor 23 of the tiltrotator. The rotation of the rotation motor 23 is preferably driven from the upstream side of the tiltrotator 2 such that the lines 14A and 14B, respectively, feeding the rotation motor 23 in opposite directions need not pass through the swivel 3 of the tiltrotator 2.

A fifth valve (not shown) may be arranged to feed the inherent hydraulic tilting cylinder 24 of the tiltrotator 2. The hydraulic tilting cylinder 24 may be comprised of two double-acting hydraulic cylinders, as shown in Figs. 2 and 4, both hydraulic cylinders being fed by the same fifth valve.

The swivel 3 includes a first pair of swivel lines 11A, 11B and a second pair of swivel lines 12A, 12B for conveying hydraulic fluid between the upper part 29 of the tiltrotator 2 to the lower part 30 thereof.

The first valve 31 of the valve arrangement is arranged to connect the pressure line P', emanating from the pressure source P, to a first hydraulic function at the lower part 30 of the tiltrotator 2, by providing a first feed flow to the lower part 30 of the tiltrotator 2 via either a first line 11A or a second line 11B of a first pair of swivel lines 11A, 11B to the hydraulic function 4, and simultaneously connect the other line of the first pair of swivel lines 11A, 11B to the tank line T' leading to the tank T. Of course, the first valve 31 may also be controlled to a rest position to stop the flow and thereby keep the first hydraulic function at rest. If the first hydraulic function is a double acting hydraulic function such as a hydraulic cylinder, the first valve 31 will hence control the operation of the first hydraulic function, and in which way the hydraulic function will operate.

The second valve 32 of the valve arrangement is, in a corresponding manner as the first valve 31, arranged to connect the pressure line P', emanating from the pressure source P, to a second hydraulic function (not shown) at the lower part 30 of the tiltrotator 2, by providing a first feed flow to the lower part 30 of the tiltrotator 2 via either the first line 12A or the second line 12B of the second pair of swivel lines 12A, 12B to the hydraulic function.

Conventionally, these two pairs of swivel lines 11A, 11B and 12A, 12B, respectively, are arranged to feed two separate hydraulic functions, which may or may not be provided on the same hydraulic tool, but often a first pair of swivel lines 11A, 11B are arranged to drive a grapple module 10 arranged at the lower part 30 of the tiltrotator 2, and the second pair of swivel lines 12A, 12B are arranged to drive a hydraulic tool that is attached to the tool coupler at the lower part 30 of the tiltrotator 2.

In accordance with the invention both the first and the second pairs of swivel lines 11A, 11B and 12A, 12B may be arranged to feed one single hydraulic function 4, typically a high demand hydraulic function that demands at least 150 I/min, or even at least 180 I/min. In a specific embodiment each pair of swivel lines 11A, 11B and 12A, 12B may be arranged to provide 100 I/min to generate a total flow of 200 I/min from the respective first and second valves 31 and 32.

In accordance with the invention the high flow is achieved in that the valve arrangement comprises a second hydraulic valve device 7 arranged at the lower part 30 of the tiltrotator 2, downstream of the swivel 3. The second hydraulic valve device 7 is arranged to connect both the first line 11A of the first pair of swivel lines 11A, 11B and the first line 12A of the second pair of swivel lines 12A, 12B at a first connection point 26 to a high demanding hydraulic tool connection EA of a tool connection pair EA, EB, and both the second line 11B of the first pair of swivel lines 11A, 11B and the second line 12B of the second pair of swivel lines 12A, 12B at a second connection point 27 to the other high demanding hydraulic tool connection EB of the pair, to provide a joint feed flow to the high demanding hydraulic tool connection pair EA, EB.

Two alternative connections may be provided for the high demanding hydraulic tool connection, a first high demanding hydraulic tool connection EA, EB on the outside of the lower part 30 of the tiltrotator 2, and a second high demanding hydraulic tool connection EA', EB' arranged on a lower side of the lower part 30 of the tiltrotator 2. Typically, the first high demanding hydraulic tool connection EA, EB is arranged for coupling by separate hoses to the hydraulic function, and the second high demanding hydraulic tool connection EA', EB' is adapted for a quick coupling arrangement. In the shown embodiment, a hydraulic tool 4 is arranged at the second high demanding hydraulic tool connection EA', EB'.

As is illustrated in the hydraulic schematic of Fig. 5 the hydraulic swivel 3 includes a third pair of swivel lines 13A, 13B for feeding the hydraulic cylinder 9 arranged to drive the locking block 8, typically in the form of two locking wedges, for locking and unlocking the hydraulic tool 4 to the tool coupler 5 at the lower part 30 of the tiltrotator 2.

The first swivel line 13A of the third pair of swivel lines 13A, 13B is connected to a first pressure chamber 9A of the hydraulic cylinder 9, i.e. the chamber of the hydraulic cylinder that pushes the locking block 8 towards its closed position, and the second swivel line 13B is connected to the opposite second chamber 9B, which may be actuated to push the locking block 8 to the open position.

The third valve 33 of the valve arrangement is arranged to connect the pressure line P' to the locking hydraulic cylinder 9, by providing a first feed flow to the lower part 30 of the tiltrotator 2 via either the first line 13A or the second line 13B of the third pair of swivel lines 13A, 13B to the hydraulic cylinder 9 for locking and unlocking a hydraulic tool 4 to the tool coupler 5 arranged at the lower part of the tiltrotator 2. The third valve 33 provides a constant pressure to one of the pressure chambers 9A or 9B of the hydraulic cylinder 9 and does not need to involve a rest position as the first and second valves 31 and 32 do. On the contrary, an initial position of the third valve 33 may be defined as when it connects the pressure line P' to the first pressure chamber 9A of the hydraulic cylinder 9, keeping the locking block 8 in its closed position.

In the shown embodiment the second hydraulic valve device 7 comprises an auxiliary valve 35 arranged to drive an auxiliary hydraulic function 17 by connecting a line 13A of the third pair of swivel lines 13A, 13B to the operating side of the auxiliary hydraulic function 17, said first swivel line 13A being arranged to the first pressure chamber 9A of the hydraulic cylinder 9, which is pressurised when the hydraulic cylinder 9 is in a closed position where the locking block is in its locking position. Hence, in this arrangement the auxiliary hydraulic function 17 may only be operated when the hydraulic cylinder 9 is in a locked position, which, of course, it must be when a tool is attached to the tool coupler 5 of the tiltrotator 2.

It is of course also possible to use the auxiliary hydraulic function 17 when no tool is connected to the, as long as the hydraulic cylinder 9 is in the locked position.

In specific embodiments the auxiliary hydraulic function 17 may be comprised of a grapple module 10 arranged on the lower part 30 of the tiltrotator 2, as illustrated in Figs. 2 and 4.

The auxiliary valve 35 is arranged to connect the pressure side 13A of the hydraulic cylinder 9 of the tool coupler 5 to the auxiliary hydraulic function 17. The auxiliary hydraulic function 17 is hence dependent on that the third valve 33 is in the position to provide pressurised hydraulic fluid to pressure side 9A of the hydraulic cylinder 9, i.e. the chamber of the hydraulic cylinder 9 that pushes the tool coupler 5 towards its closed position. Consequently, the auxiliary hydraulic function 17 will only be operable when the locking block 8 is in its closed position, or at least pressurised towards the closed position. A control unit 25 for controlling safety valves (not shown) may be arranged to prevent the tool coupler 5 from opening during operation. Typically, the pressure side 9A of the hydraulic cylinder 9 always remains pressurised when the locking block 8 is in its closed position.

The auxiliary valve 35 is controlled by a valve actuator 36 arranged in the second hydraulic valve device 7, see Fig. 8.

In addition to the third pair of swivel lines 13A, 13B, a drainage line 13T is arranged to provide a return flow from the auxiliary hydraulic function 17 to tank T. All these lines, including the three pair of swivel lines 11, 12, and 13, and the drainage line 13T are lines that are conventionally provided through the swivel 3 of a tiltrotator, such that no adaptations of the tiltrotator is needed to implement the inventive valve arrangement. In fact, most existing valve arrangements of a tiltrotator may be upgraded to an inventive valve arrangement by the implementation and connecting of the second hydraulic valve device 7 to said existing valve arrangement.

In Fig. 6 hydraulic schematic representing an alternative embodiment is shown, in which the third valve 33' is arranged in the second hydraulic valve device 7, and wherein an extended pressure line P" and an extended tank line T" are provided to the third valve 33' via the swivel 3.

Further, the auxiliary valve 35' in this embodiment is also connected to the extended pressure line P" and the extended tank line T". Hence, in this embodiment one line less through the swivel 3 is utilised. On the other hand, the second hydraulic valve device 7 includes an additional valve with respect to the embodiment shown in Fig. 5 and is therefore somewhat larger.

As is illustrated in Fig. 7, each of the valves of the first hydraulic valve device 6 may be controlled between a rest position and two active positions by dedicated valve actuators 31A-31B, 32A-32B, 33A-33B, and 34A-34B that control the respective valve slides. The connections 14A' and 14B' to the rotation motor of the tiltrotator are visible at the near end of the first hydraulic valve device 6.

A possible embodiment of the second hydraulic valve device 7 is shown in a perspective view in Fig. 8. The connections of the different swivel lines, the three pair of swivel lines 11, 12, and 13 and the drainage line 13T, are provided on the non-shown side of the valve device 7, which is configured to be facing upwards, towards the lower part 30 of the swivel 2 in operation.

Visible in the shown embodiment are connections 13A and 13B for the auxiliary hydraulic function 17, and that second pair of high demanding hydraulic tool connections EA' and EB'. Valve actuators 35A-35B that control the valve slide of the auxiliary valve 35 between a rest position and two active positions are arranged on opposite sides of the second hydraulic valve device 7.

Above, the invention has been described with reference to specific embodiments. The invention is however not limited to these embodiments. It is obvious to a person skilled in the art that other embodiments are possible within the scope of the following claims.

## Claims

1. A tiltrotator arrangement comprising a valve arrangement and a tiltrotator (2), the tiltrotator comprising a tool coupler (5) for carrying a hydraulic tool, and a hydraulic swivel (3) including at least a first pair of swivel lines (11A, 11B) and a second pair of swivel lines (12A, 12B) for conveying hydraulic fluid between an upper part (29) of the tiltrotator (2) to a lower part (30) thereof, the lower part (30) being rotationally coupled to the upper part (29), the valve arrangement comprising:
a first hydraulic valve device (6) arranged at the upper part (29) of the tiltrotator (2), which first hydraulic valve device (6) is connected to a hydraulic pressure source (P) via a pressure line (P') and to a tank (T) via a tank line (T'), the first hydraulic valve device (6) comprising:
a first valve (31) to connect the pressure line (P') to a first line (11A) of the first pair of swivel lines (11A, 11B) to provide a first feed flow to the lower part (30) of the tiltrotator (2) via said first line (11A) and to simultaneously connect a second line (11B) of the first pair of swivel lines (11A, 11B) to the tank line (T'), and
a second valve (32) to connect the pressure line (P') to a first line (12A) of the second pair of swivel lines (12A, 12B) to provide a second feed flow to the lower part (30) of the tiltrotator (2) via said second line (12A) and to simultaneously connect a second line (12B) of the second pair of swivel lines (12A, 12B) to the tank line (T'),
**characterised in that** the valve arrangement further comprises a second hydraulic valve device (7) arranged at the lower part (30) of the tiltrotator (2) to interconnect the first line (11A) of the first pair of swivel lines (11A, 11B) with the first line (12A) of the second pair of swivel lines (12A, 12B) and the second line (11B) of the first pair of swivel lines (11A, 11B) with the second line (12B) of the second pair of swivel lines (12A, 12B) to a high demanding hydraulic tool connection (EA,EB; EA',EB') to provide a joint feed flow to the high demanding hydraulic tool connection (EA,EB; EA',EB').

2. The tiltrotator arrangement according to claim 1, wherein the second hydraulic valve device (7) comprises an auxiliary valve (35) arranged to connect a third pair of swivel lines (13A, 13B) to an auxiliary hydraulic function (17).

3. The tiltrotator arrangement according to claim 1 or 2, wherein a locking block (8) is arranged at the lower part (30) of the tiltrotator (2) for locking and unlocking a hydraulic tool (4) to a tool coupler (5), and wherein a third valve (33, 33') is arranged to regulate the locking block (8) by connecting the pressure line (P') to either a first side (9A) of a hydraulic cylinder (9) to push the locking block (8) to a closed position or a second side (9B) of the hydraulic cylinder (9) to push the locking block (8) to an open position.

4. The tiltrotator arrangement according to claim 3, wherein the third valve (33) is arranged in the first hydraulic valve device (6) to provide a feed flow to the lower part (30) of the tiltrotator (2) via a pair of swivel lines (13A, 13B') via the swivel (3).

5. The tiltrotator arrangement according to claim 3, wherein the third valve (33') is arranged in the second hydraulic valve device (7), and wherein an extended pressure line (P") and an extended tank line (T") are provided to the third valve (33') via the swivel (3).

6. The valve arrangement according to claim 4 when dependent on claim 2 and 3, wherein the auxiliary hydraulic function (17) and the hydraulic cylinder (9) share a swivel line (13A), which is connected to the auxiliary valve (35) and to the first side (9A) of the hydraulic cylinder (9) to push the locking block (8) to a closed position, and wherein the auxiliary valve (35) is arranged to only be operable when the tool coupler (5) is in a closed position.

7. The tiltrotator arrangement according to any one of the claims 2 - 6, wherein the auxiliary hydraulic function (17) is a grapple module (10) arranged on the tiltrotator (2).

8. The tiltrotator arrangement according to anyone of the preceding claims, wherein the first hydraulic valve device (6) is configured to provide a flow of at least 75 I/min, preferably at least 90 I/min, via both the first swivel line (11) and the second swivel line (12) to provide a joint feed flow (F₁₊₂) of at least 150 I/min, preferably at least 180 I/min, to the high demanding hydraulic tool (EA, EB).

9. The tiltrotator arrangement according to anyone of the preceding claims, wherein two alternative connections are provided for the high demanding hydraulic tool connection (EA,EB; EA',EB'), a first high demanding hydraulic tool connection (EA, EB) on the outside of the lower part (30) of the tiltrotator (2), and a second high demanding hydraulic tool connection (EA', EB') arranged on a lower side of the lower part (30).

## Patentansprüche

1. Eine Tiltrotator-Anordnung, umfassend eine Ventilanordnung und einen Tiltrotator (2), wobei der Tiltrotator eine Werkzeugkupplung (5) zum Tragen eines hydraulischen Werkzeugs und ein hydraulisches Schwenkgelenk (3) umfasst, das mindestens ein erstes Paar Schwenkleitungen (11A, 11B) und ein zweites Paar Schwenkleitungen (12A, 12B) zum Fördern von Hydraulikflüssigkeit zwischen einem oberen Teil (29) des Tiltrotators (2) und einem unteren Teil (30) desselben, wobei der untere Teil (30) drehbar mit dem oberen Teil (29) verbunden ist, wobei die Ventilanordnung umfasst:
eine erste Hydraulikventilvorrichtung (6), die am oberen Teil (29) des Tiltrotators (2) angeordnet ist, wobei die erste Hydraulikventilvorrichtung (6) über eine Druckleitung (P') mit einer Hydraulikdruckquelle (P) und über eine Tankleitung (T') mit einem Tank (T) verbunden ist,
wobei die erste Hydraulikventilvorrichtung umfasst:
ein erstes Ventil (31) zum Verbinden der Druckleitung (P') mit einer ersten Leitung (11A) des ersten Paares Schwenkleitungen (11A, 11B) zum Bereitstellen eines ersten Zuflusses zum unteren Teil (30) des Tiltrotators (2) über die erste Leitung (11A) und zum gleichzeitigen Verbinden einer zweiten Leitung (11B) des ersten Paares Schwenkleitungen (11A, 11B) mit der Tankleitung (T'); und
ein zweites Ventil (32), zum Verbinden der Druckleitung (P') mit einer ersten Leitung (12A) des zweiten Paares Schwenkleitungen (12A, 12B) zum Bereitstellen eines zweiten Zuflusses zum unteren Teil (30) des Tiltrotators (2) über die zweite Leitung (12A) und zum gleichzeitigen Verbinden einer zweiten Leitung (12B) des zweiten Paares Schwenkleitungen (12A, 12B) mit der Tankleitung (T'),
**dadurch gekennzeichnet, dass** die Ventilanordnung ferner eine zweite hydraulische Ventilvorrichtung (7) umfasst, die am unteren Teil (30) des Tiltrotators (2) angeordnet ist, um die erste Leitung (11A) des ersten Paares Schwenkleitungen (11A, 11B) mit der ersten Leitung (12A) des zweiten Paares Schwenkleitungen (12A, 12B) und die zweite Leitung (11B) des ersten Paares Schwenkleitungen (11A, 11B) mit der zweiten Leitung (12B) des zweiten Paares Schwenkleitungen (12A, 12B) mit einem Hochbedarfs-Hydraulikwerkzeuganschluss (EA, EB; EA', EB') zu verbinden, um einen gemeinsamen Zufluss zum Hochbedarfs-Hydraulikwerkzeuganschluss (EA, EB; EA', EB') bereitzustellen.

2. Die Tiltrotator-Anordnung nach Anspruch 1, wobei die zweite Hydraulikventilanordnung (7) ein Hilfsventil (35) umfasst, das so angeordnet ist, dass es ein drittes Paar Schwenkleitungen (13A, 13B) mit einer hydraulischen Hilfsfunktion (17) verbindet.

3. Die Tiltrotator-Anordnung nach Anspruch 1 oder 2, wobei am unteren Teil (30) des Tiltrotators (2) ein Verriegelungsblock (8) zum Verriegeln und Entriegeln eines Hydraulikwerkzeugs (4) an einer Werkzeugkupplung (5) angeordnet ist und wobei ein drittes Ventil (33, 33') vorgesehen ist, um den Verriegelungsblock (8) zu steuern, indem die Druckleitung (P') entweder mit einer ersten Seite (9A) eines Hydraulikzylinders (9) verbunden wird, um den Verriegelungsblock (8) in eine geschlossene Position zu drücken, oder mit einer zweiten Seite (9B) des Hydraulikzylinders (9), um den Verriegelungsblock (8) in eine offene Position zu drücken.

4. Die Tiltrotator-Anordnung nach Anspruch 3, wobei das dritte Ventil (33) in der ersten Hydraulikventilanordnung (6) angeordnet ist, um über ein Paar Schwenkleitungen (13A, 13B') über das Schwenkgelenk (3) einen Zufluss zum unteren Teil (30) des Tiltrotators (2) bereitzustellen.

5. Die Tiltrotator-Anordnung nach Anspruch 3, wobei das dritte Ventil (33') in der zweiten Hydraulikventilanordnung (7) angeordnet ist und wobei eine verlängerte Druckleitung (P") und eine verlängerte Tankleitung (T") über das Drehgelenk (3) zum dritten Ventil (33') geführt sind.

6. Die Ventilanordnung nach Anspruch 4, in Abhängigkeit von den Ansprüchen 2 und 3, wobei die Zusatzhydraulikfunktion (17) und der Hydraulikzylinder (9) sich eine Schwenkleitung (13A) teilen, die mit dem Zusatzventil (35) und mit der ersten Seite (9A) des Hydraulikzylinders (9) verbunden ist, um den Verriegelungsblock (8) in eine geschlossene Position zu drücken, und wobei das Zusatzventil (35) so angeordnet ist, dass es nur betätigbar ist, wenn sich die Werkzeugkupplung (5) in einer geschlossenen Position befindet.

7. Die Tiltrotator-Anordnung gemäß einem der Ansprüche 2 bis 6, wobei die Zusatzhydraulikfunktion (17) ein am Tiltrotator (2) angeordnetes Greifermodul (10) ist.

8. Die Tiltrotator-Anordnung gemäß einem der vorstehenden Ansprüche, wobei die erste Hydraulikventilanordnung (6) so ausgelegt ist, dass sie einen Durchfluss von mindestens 75 I/min, vorzugsweise mindestens 90 I/min, sowohl über die erste Schwenkleitung (11) als auch über die zweite Schwenkleitung (12) bereitstellt, um einen gemeinsamen Zufluss (F₁₊₂ ) von mindestens 150 I/min, vorzugsweise mindestens 180 I/min, an das Hochbedarfs-Hydraulikwerkzeug (EA, EB) bereitzustellen.

9. Tiltrotator-Anordnung nach einem der vorstehenden Ansprüche, wobei zwei alternative Anschlüsse für den Hochbedarfs-Hydraulikwerkzeuganschluss (EA, EB; EA', EB') vorgesehen sind: ein erster Hochbedarfs-Hydraulikwerkzeuganschluss (EA, EB) an der Außenseite des Unterteils (30) des Tiltrotators (2) und ein zweiter Hochbedarfs-Hydraulikwerkzeuganschluss (EA', EB'), der an einer Unterseite des Unterteils (30) angeordnet ist.

## Revendications

1. Agencement de rotateur inclinable comprenant un agencement de vanne et un rotateur inclinable (2), le rotateur inclinable comprenant un coupleur d'outil (5) pour porter un outil hydraulique, et un joint tournant hydraulique (3) comprenant au moins une première paire de conduites de joint tournant (11A, 11B) et une deuxième paire de conduites de joint tournant (12A, 12B) pour transporter du fluide hydraulique entre une partie supérieure (29) de rotateur inclinable (2) jusqu'à sa partie inférieure (30), la partie inférieure (30) étant couplée, de manière rotative, à la partie supérieure (29), l'agencement de vanne comprenant :
un premier dispositif de vanne hydraulique (6) agencé au niveau de la partie supérieure (29) du rotateur inclinable (2), lequel premier dispositif de vanne hydraulique (6) est raccordé à une source de pression hydraulique (P) via une conduite de pression (P') et à un réservoir (T) via une conduite de réservoir (T'), le premier dispositif de vanne hydraulique (6) comprenant :
une première vanne (31) pour raccorder la conduite de pression (P') à une première conduite (11A) de la première paire de conduites de joint tournant (11A, 11B) afin de fournir un premier débit d'alimentation à la partie inférieure (30) du rotateur inclinable (2) via ladite première conduite (11A) et pour raccorder simultanément une deuxième conduite (11B) de la première paire de conduites de joint tournant (11A, 11B) à la conduite de réservoir (T'), et
une deuxième vanne (32) pour raccorder la conduite de pression (P') à une première conduite (12A) de la deuxième paire de conduites de joint tournant (12A, 12B) afin de fournir un second débit d'alimentation à la partie inférieure (30) du rotateur inclinable (2) via ladite deuxième conduite (12A) et pour raccorder simultanément une deuxième conduite (12B) de la deuxième paire de conduites de joint tournant (12A, 12B) à la conduite de réservoir (T'),
**caractérisé en ce que** l'agencement de vanne comprend en outre un second dispositif de vanne hydraulique (7) agencé au niveau de la partie inférieure (30) du rotateur inclinable (2) afin d'interconnecter la première conduite (11A) de la première paire de conduites de joint tournant (11A, 11B) avec la première conduite (12A) de la deuxième paire de conduites de joint tournant (12A, 12B) et la seconde conduite (11B) de la première paire de conduites de joint tournant (11A, 11B) avec la seconde conduite (12B) de la deuxième paire de conduites de joint tournant (12A, 12B) à un raccordement pour outil hydraulique à forte demande (EA, EB ; EA', EB') afin de fournir un débit d'alimentation commun au raccordement pour outil hydraulique à forte demande (EA, EB ; EA', EB').

2. Agencement de rotateur inclinable selon la revendication 1, dans lequel le second dispositif de vanne hydraulique (7) comprend une vanne auxiliaire (35) agencée pour raccorder une troisième paire de conduites de joint tournant (13A, 13B) à une fonction hydraulique auxiliaire (17).

3. Agencement de rotateur inclinable selon la revendication 1 ou 2, dans lequel un bloc de verrouillage (8) est agencé au niveau de la partie inférieure (30) du rotateur inclinable (2) pour verrouiller et déverrouiller un outil hydraulique (4) d'un coupleur d'outil (5), et dans lequel une troisième vanne (33, 33') est agencée pour réguler le bloc de verrouillage (8) en raccordant la conduite de pression (P') à l'un ou l'autre parmi un premier côté (9A) d'un vérin hydraulique (9) afin de pousser le bloc de verrouillage (8) dans une position fermée ou un second côté (9B) du vérin hydraulique (9) afin de pousser le bloc de verrouillage (8) dans une position ouverte.

4. Agencement de rotateur inclinable selon la revendication 3, dans lequel la troisième vanne (33) est agencée dans le premier dispositif de vanne hydraulique (6) pour fournir un débit d'alimentation à la partie inférieure (30) du rotateur inclinable (2) via une paire de conduites de joint tournant (13A, 13B') via le joint tournant (3).

5. Agencement de rotateur inclinable selon la revendication 3, dans lequel la troisième vanne (33') est agencée dans le second dispositif de vanne hydraulique (7) et dans lequel une conduite de pression étendue (P") et une conduite de réservoir étendue (T") sont prévues sur la troisième vanne (33') via le joint tournant (3).

6. Agencement de rotateur inclinable selon la revendication 4, lorsqu'elle dépend des revendications 2 et 3, dans lequel la fonction hydraulique auxiliaire (17) et le vérin hydraulique (9) partagent une conduite de joint tournant (13A) qui est raccordée à la vanne auxiliaire (35) et au premier côté (9A) du vérin hydraulique (9) pour pousser le bloc de verrouillage (8) vers une position fermée, et dans lequel la vanne auxiliaire (35) est agencée pour n'être opérationnelle que lorsque le coupleur d'outil (5) est dans une position fermée.

7. Agencement de rotateur inclinable selon l'une quelconque des revendications 2 à 6, dans lequel la fonction hydraulique auxiliaire (17) est un module de préhension (10) agencé dans le rotateur inclinable (2).

8. Agencement de rotateur inclinable selon l'une quelconque des revendications précédentes, dans lequel le premier dispositif de vanne hydraulique (6) est configuré pour fournir un débit d'au moins 75 l/min, de préférence d'au moins 90 l/min, à la fois via la première conduite de joint tournant (11) et la seconde conduite de joint tournant (12) pour fournir un débit d'alimentation commun (F_{1 + 2}) d'au moins 150 l/min, de préférence d'au moins 180 l/min, à l'outil hydraulique à forte demande (EA, EB).

9. Agencement de rotateur inclinable selon l'une quelconque des revendications précédentes, dans lequel deux raccordements en variante sont prévus pour le raccordement pour outil hydraulique à forte demande (EA, EB ; EA', EB'), un premier raccordement pour outil hydraulique à forte demande (EA, EB) à l'extérieur de la partie inférieure (30) du rotateur inclinable (2) et un second raccordement pour outil hydraulique à forte demande (EA', EB') agencé sur un côté inférieur de la partie inférieure (30).
